# EUROPEAN PATENT APPLICATION

(11) **EP 4 600 622 A1**
(43) Date of publication of application: **13.08.2025**
(21) Application number: 24809972.3
(22) Date of filing: 07.02.2024
(51) Int. Cl.: G01L 1/18, H01M 10/48

(54) **PRESSURE SENSOR, BATTERY CELL, AND ELECTRICAL DEVICE**

(30) Priority: 19.05.2023 CN 202310572287
(71) Applicant: Contemporary Amperex Technology Co., Limited, Ningde, Fujian 352100 (CN)
(72) Inventor: ZHU, Cuicui, Ningde, Fujian 352100 (CN); ZHANG, Jijun, Ningde, Fujian 352100 (CN); WANG, Shaofei, Ningde, Fujian 352100 (CN); WEI, Yimin, Ningde, Fujian 352100 (CN); LI, Yang, Ningde, Fujian 352100 (CN)
(74) Representative: Frick, Robert
(86) International application number: PCT/CN2024/076631
(87) International publication number: WO 2024/239723

(57) **Abstract**

**ABSTRACT**

A pressure sensor (400) including an electrode layer (40) and a sensitive layer (42). The sensitive layer (42) is provided with at least two types of protrusion structures (422) of different heights. Each type of the protrusion structure (422) includes at least one protrusion. Each protrusion is located on a side of a base layer (420) facing the electrode layer (40), and the area of contact between each protrusion and the electrode layer (40) is configured to vary with changes in pressure applied to the electrode layer (40). In this way, the pressure sensor (400) can adapt to detection environments under various pressures, thereby effectively increasing the detection range of the pressure sensor (400) and improving the detection sensitivity of the pressure sensor (400). Further provided is a battery cell (20) and an electrical device.

## Description

### TECHNICAL FIELD

The present application relates to the field of measurement technology, and in particular to a pressure sensor, a battery cell, and an electrical device.

### BACKGROUND

A pressure sensor is a component that outputs applied pressure in the form of electrical signals. It is characterized by a simple structure, low power consumption, and fast dynamic response. It is widely used in various fields. For example, it can be embedded in a battery to detect behaviors such as electrode expansion inside the battery, reflect the evolution process of the battery's internal structure, and monitor the battery's operational status in real time. With the development of new energy technologies, battery types have increased, requirements for battery performance have become higher, and detection demands have also grown. However, the existing pressure sensors have a low degree of adaptability. Therefore, there is a need to enhance the applicability of pressure sensors.

### SUMMARY OF THE INVENTION

The present application primarily addresses the technical problem of providing a pressure sensor, a battery cell, and an electrical device. The pressure sensor can adapt to detection environments under various pressures, thereby effectively increasing the detection range of the pressure sensor and improving the detection sensitivity of the pressure sensor.

In a first aspect, the present application provides a pressure sensor, the pressure sensor including an electrode layer and a sensitive layer. The sensitive layer includes a base layer and at least two types of protrusion structures of different heights protruding from the base layer, each type of the protrusion structure including at least one protrusion, where each protrusion is located on a side of the base layer facing the electrode layer, and the area of contact between each protrusion and the electrode layer is configured to vary with changes in pressure applied to the electrode layer. By arranging two types of protrusion structures of different heights, the pressure-sensitive ranges of protrusion structures are differentially set across heights, enabling the pressure sensor to adapt to detection environments under various pressures, thereby effectively increasing the detection range of the pressure sensor and improving the detection sensitivity of the pressure sensor.

In some embodiments of the present application, along a height direction of the protrusion structures, at least a portion of the protrusion structures of relatively smaller heights are spaced apart from the electrode layer and are configured to contact the electrode layer when subjected to pressure greater than a predetermined threshold. This approach allows the protrusion structures of relatively smaller heights to contact the electrode layer only after the protrusion structures of relatively larger heights are compressed to a certain extent. This can ensure that the pressure-sensitive ranges of the protrusion structures of relatively larger heights are effectively staggered from the pressure-sensitive ranges of the protrusion structures of relatively smaller heights, thereby further expanding the detection range and sensitivity.

In some embodiments of the present application, along the height direction of the protrusion structures, the protrusion structure of the largest height is configured to maintain contact with the electrode layer at all times. By supplementing microstructures at positions prone to collapse, abrupt drops in resistance can be effectively delayed, thereby extending the range of the sensor. The protrusion structure of the largest height can provide support for the sensitive layer, effectively mitigating adverse effects caused by collapse of the sensitive layer.

In some embodiments of the present application, the protrusion structure of the largest height is disposed in a central region and/or corner regions of the sensitive layer. The central region and the corner regions are regions relatively prone to collapse, and particularly when the sensitive layer has a large area, the central region is more prone to collapse. By arranging protrusion structures of relatively larger heights in the corner and central region that are relatively prone to collapse, the sensitive layer can be more effectively supported.

In some embodiments of the present application, the protrusion has a cross section perpendicular to a height direction of the protrusion, and in a direction from the base layer to the electrode layer, the cross section of the protrusion gradually decreases in size. Through this configuration, when the protrusion is compressed under pressure, the area of contact with the electrode layer gradually changes, which can effectively improve the sensitivity of the area of contact of the protrusion to pressure. After a higher-level microstructure reaches a compression limit under pressure, a lower-level microstructure supplements contact with the electrode, and by means of graded pressure distribution through microstructures, the sensitivity of the sensor within a large range can be significantly improved, and pressure changes can be better distinguished.

In some embodiments of the present application, the protrusion is configured in a spherical cap shape. Through this configuration, by utilizing the curved characteristics of outer surface of the spherical cap, the sensitivity of the area of contact of the protrusion to pressure can be further effectively improved.

In some embodiments of the present application, each type of the protrusion structure includes a plurality of protrusions, and the plurality of protrusions of the same type of the protrusion structure are spaced apart and disposed along an annular reference line centered on a preset reference point. By arranging protrusions of the same height along the annular reference line, the annular reference line can be used as a unit for design considerations during the design process, reducing the arrangement complexity of protrusions.

In some embodiments of the present application, the preset reference point is disposed in a maximum deformation zone of the sensitive layer subjected to pressure. By setting the center of the annular reference line at the maximum deformation zone and setting appropriate annular reference lines based on the regularity of deformation of the sensitive layer relative to the maximum deformation zone, the arrangement complexity of the protrusion structures can be further reduced.

In some embodiments of the present application, the preset reference point is disposed in the central region of the sensitive layer. By disposing the preset reference point in the central region of the sensitive layer, more space can be reserved around it for arrangement of annular reference lines, thereby further reducing the arrangement complexity of the protrusion structures.

In some embodiments of the present application, each type of the protrusion structure includes a plurality of protrusions, and the plurality of protrusions of the same type of the protrusion structure are spaced apart to form a plurality of groups of annular structures, a plurality of protrusions of each group of annular structures being located on one annular reference line. By grouping protrusions of the same height and planning with the annular reference line as a unit, particularly when the sensitive layer has a large area and the number of protrusion structures is large, group-based planning can further reduce the arrangement complexity of the protrusion structures.

In some embodiments of the present application, the number of the protrusions of the same height on the same annular reference line is not fewer than three. Through this configuration, the gradient of changes in the area of contact is increased, which is beneficial for improving the sensitivity of the pressure sensor.

In some embodiments of the present application, the protrusion structures of different heights are located on different annular reference lines. By utilizing different annular reference lines to plan protrusion structures of different heights, the arrangement complexity of the protrusion structures is reduced.

In some embodiments of the present application, at least a portion of the protrusions are configured to be capable of partially overlapping with protrusions of other heights after being moved along the annular reference lines on which they are located. This configuration is beneficial for increasing the arrangement density of the protrusion structures, thereby improving the sensitivity of the pressure sensor.

In some embodiments of the present application, the annular reference line includes one of a circle, an ellipse, or a polygon. By utilizing the equidistant property of the graphic to the center, the arrangement complexity can be reduced.

In some embodiments of the present application, the protrusion has a cross section perpendicular to a height direction of the protrusion, and a maximum cross-sectional dimension of the protrusion of the protrusion structure of a relatively smaller height is smaller than a maximum cross-sectional dimension of the protrusion of the protrusion structure of a relatively larger height. This allows the protrusion structures of relatively smaller heights to deform more easily, thereby making the change in the area of contact more sensitive to pressure and improving the sensitivity when the protrusion structures of relatively smaller heights contact the electrode layer.

In some embodiments of the present application, the number of the protrusion structures of relatively smaller heights is greater than the number of the protrusion structures of relatively larger heights. By increasing the number of protrusion structures of relatively smaller heights, the overall pressure borne by the relatively smaller protrusion structures can be increased, while also increasing the rate of change of the area of contact of the relatively smaller protrusion structures with pressure, thereby improving the detection sensitivity.

In some embodiments of the present application, the plurality of protrusion structures have at least three different heights. By means of graded pressure distribution through protrusion structures, the sensitivity of the sensor within a large range can be significantly improved, and pressure changes can be better distinguished. By providing a plurality of heights, the range and sensitivity can be increased.

In some embodiments of the present application, in two adjacent heights of the at least two different heights, a ratio of a difference between a relatively larger height and a relatively smaller height to the relatively larger height is 0.3-0.8. Through this configuration, the continuity of changes in the area of contact can be improved, thereby enhancing the sensitivity.

In some embodiments of the present application, heights of the plurality of protrusion structures are 5-200 µm; optionally, heights of the plurality of protrusion structures are 10-50 µm. By setting the heights within the above range, excessive pressure borne by protrusion structures of relatively larger heights is avoided, and pressure sensitivity of the area of contact of protrusion structures of relatively smaller heights is improved, thereby enabling the pressure sensor to have a higher range.

In some embodiments of the present application, a material of the sensitive layer includes a flexible substrate and conductive particles dispersed within the flexible substrate. This enables the protrusion structures to have conductivity and elasticity, with better deformation recovery capability.

In some embodiments of the present application, the conductive particles include graphite particles and carbon nanotube particles. The selected particles have high conductivity, and can achieve nanoscale dimensions, and are more uniformly dispersed, resulting in higher sensitivity.

In some embodiments of the present application, the electrode layer includes a first electrode and a second electrode arranged in an interdigitated manner. By selecting interdigitated finger-based coplanar electrodes, the thickness of the sensor can be effectively reduced without affecting the deformation capability of the sensitive layer under pressure, thereby achieving sensitive resistance change collection capability.

In some embodiments of the present application, the first electrode includes a plurality of first electrode strips arranged side by side and spaced apart, and the second electrode includes a plurality of second electrode strips arranged side by side and spaced apart, where at least a portion of the first electrode strips are disposed in spacing regions between the second electrode strips, widths of the first electrode strips and the second electrode strips are 10-200 µm, and spacing distances between adjacent first electrode strips and second electrode strips are 5-200 µm; optionally, the widths of the first electrode strips and the second electrode strips are 50-150 µm, and the spacing distances between adjacent first electrode strips and second electrode strips are 20-80 µm. Through rational configuration of the widths and spacing of the electrode strips, conductive networks can be easily formed between the first electrode and the second electrode via the protrusion structures, improving detection sensitivity of the sensor.

In some embodiments of the present application, the protrusion structure has a cross section perpendicular to a height direction of the protrusion structure, and a maximum cross-sectional dimension of the protrusion structure is greater than or equal to 1.5 times the spacing distance. This configuration facilitates the formation of an electrical connection directly with the adjacent first and second electrode strips using a single protrusion structure.

In a second aspect, the present application provides a battery cell. The battery cell includes a shell and the pressure sensor according to any one of the aforementioned embodiments, where the pressure sensor is disposed inside the shell. This enables acquisition of internal information of the battery, and the acquired data is more accurate.

In a third aspect, the present application provides an electrical device including the aforementioned battery cell. This enables acquisition of internal information of the battery, and the acquired data is more accurate.

The above description is only an overview of the technical solution of the present application. In order to better understand the technical means of the present application and thus implement them according to the contents of the specification, and in order to make the aforementioned and other objectives, features, and advantages of the present application more obvious and understandable, detailed description of the present application will be made specifically below.

### BRIEF DESCRIPTION OF DRAWINGS

In order to illustrate the technical solutions in the embodiments of the present application more clearly, the drawings to be used in the description of the embodiments will be briefly introduced below. Obviously, the drawings described below are only some embodiments of the present application. For those of ordinary skill in the art, other drawings can also be obtained according to these drawings without any creative effort. In the drawings:
FIG. 1 is a cross-sectional structural schematic diagram of a pressure sensor according to one or more embodiments of the present application;
FIG. 2 is a cross-sectional structural schematic diagram of the pressure sensor under different pressure states according to one or more embodiments of the present application;
FIG. 3 is a cross-sectional structural schematic diagram of a pressure sensor according to one or more embodiments of the present application;
FIG. 4 is a planar structural schematic diagram of a sensitive layer of the pressure sensor according to one or more embodiments of the present application;
FIG. 5 is a planar structural schematic diagram of the pressure sensor according to one or more embodiments of the present application;
FIG. 6 is an exploded structural schematic diagram of a battery according to one or more embodiments of the present application;
FIG. 7 is an exploded structural schematic diagram of a battery cell according to one or more embodiments of the present application; and
FIG. 8 is a structural schematic diagram of a vehicle according to one or more embodiments of the present application.

In the accompanying drawings:
1000, vehicle; 300, motor; 200, controller; 100, battery; 10, box; 11, first portion; 12, second portion; 20, battery cell; 21, end cover; 21a, electrode terminal; 22, case; 23, electrode assembly;
400, pressure sensor; 40, electrode layer; 42, sensitive layer; 420, base layer; 422, protrusion structure; 4221, protrusion; 42211, protrusion; 4222, protrusion; 42221, protrusion; 4223, protrusion; 401, first electrode; 402, second electrode; 403, electrode substrate; 44, corrosion-resistant protective layer; 46, isolation layer; 48, sensitive layer binder; 49, isolation layer binder.

### DETAILED DESCRIPTION

The technical solutions in the embodiments of the present application will be clearly and completely described below with reference to the accompanying drawings of the embodiments of the present application. Apparently, the embodiments described are merely some rather than all of the embodiments of the present application. All the other embodiments obtained by a person of ordinary skill in the art based on the embodiments of the present application without any creative effort shall fall within the scope of protection of the present application.

Unless otherwise defined, all technical and scientific terms used herein have the same meaning as commonly understood by those skilled in the art belonging to the technical field of the present application. The terms used herein are intended only for the purpose of describing specific embodiments and are not intended to limit the present application. The terms "including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, unless explicitly and specifically limited otherwise, the term "plurality of" refers to two or more (including two). By the same principle, "plurality of groups" refers to two or more groups (including two groups), and "plurality of pieces" refers to two or more pieces (including two pieces).

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. In addition, the character "/" herein usually indicates an "or" relation between associated objects.

In the descriptions of the embodiments of present application, orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential" and the like are orientations or positional relationships as shown in the drawings, and are only for the purpose of facilitating and simplifying the descriptions of the embodiments of the present application instead of indicating or implying that devices or elements indicated must have particular orientations, and be constructed and operated in the particular orientations, so that these terms are not construed as limiting the embodiments of the present application.

In the description of the embodiments of the present application, unless otherwise specified and limited, the technical terms "mounting," "connection," "connection" and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skill in the art, the specific meanings of the aforementioned terms in the embodiments of the present application can be understood according to specific situations.

Herein, quantities, ratios, and other numerical values are presented in range formats. It should be understood that such range formats are used for convenience and brevity, and should be interpreted flexibly to include not only the numerical values explicitly specified as range limits but also all individual numerical values or subranges encompassed within the stated ranges, as if each numerical value and subrange were explicitly specified.

With the widespread application of electrochemical apparatuses (e.g., lithium-ion batteries), people's requirements for their performance are increasingly stringent, especially in terms of battery safety, stability, capacity, etc., and it is expected that batteries will have comprehensive performance that is good in all aspects. A lithium battery is a complex system in which chemical energy, thermal energy, and electrical energy are highly coupled in (electro)chemical reactions. Real-time monitoring of the internal operating state of the battery is critical for the development and design of new batteries and their efficient and safe operation. At the microscopic level, during the charging and discharging processes of lithium batteries, lithium deintercalation and intercalation reactions cause electrode material expansion and leads to increased internal stress of the battery, making it extremely prone to phenomena such as electrode delamination and increased SEI film thickness. Studies have shown that the amount of expansion of graphite electrodes can reach 10%, while that of graphite-silicon composite electrodes can reach 280%. Under long-term cycling, due to the difficulty in lithium ion deintercalation caused by changes in battery potential, irreversible expansion of internal electrode plates will occur, accompanied by electrolyte consumption, capacity reduction, lithium dendrite formation, and other problems, leading to performance degradation and shortened lifespan of the battery. At the macroscopic level, the superposition of expansion behaviors in multi-layer wound electrode plates causes volume expansion of battery cells, and extrusion with the battery shell causes battery deformation. Under the synergistic coupling of mechanical and thermal effects, the internal and external stresses and heat generation behavior of the battery undergo significant changes, with uncontrollable factors increasing over usage time. The electrode expansion behavior can reflect the evolution process of the internal structure and contains rich information. The acquisition of information on the battery expansion behavior is of great significance for comprehensively and deeply understanding the operating mode of lithium batteries, optimizing battery material selection, monitoring battery energy conversion states, gaining a deeper understanding of the internal operating mechanism of batteries, and establishing more accurate digital twin models of battery cells. It can provide important information for the Battery Management System (BMS), further improving the safety, efficiency, and stability of lithium batteries during operation.

To obtain information on the interior of the battery to a greater extent and with greater fidelity, embedded sensors can be used to embed the sensors inside the battery to measure temperature, stress, etc. However, currently, most sensors collect only a single physical quantity, resulting in a narrow scope of application and a significant lack of development and design of high-performance embedded sensors.

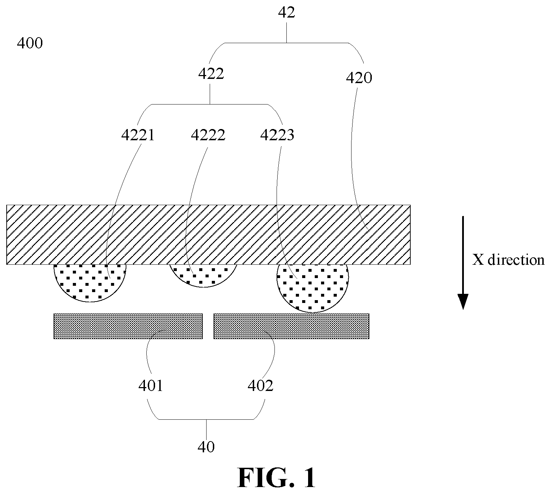

To solve the above technical problems, the present application provides a pressure sensor. Reference may be made to FIG. 1. FIG. 1 is a cross-sectional structural schematic diagram of a pressure sensor according to one or more embodiments of the present application. The pressure sensor 400 includes an electrode layer 40 and a sensitive layer 42. The sensitive layer 42 includes a base layer 420 and at least two types of protrusion structures 422 of different heights protruding from the base layer 420, each type of the protrusion structure 422 including at least one protrusion, where each protrusion is located on a side of the base layer 420 facing the electrode layer 40, and the area of contact between each protrusion and the electrode layer 40 is configured to vary with changes in pressure applied to the electrode layer 40.

The pressure sensor 400 is a component that outputs applied pressure in the form of electrical signals. The pressure sensor 400 may be a resistive sensor, which utilizes resistance changes to convert the measured pressure into an electrical signal output that has a certain relationship with the measured pressure.

The pressure sensor 400 may be a thin-film sensor. The thin-film sensor can incorporate metal materials, semiconductor materials, and high-molecular polymers to form sensors for temperature, pressure, strain, etc., and can be embedded inside batteries to measure temperature and stress. This enables in-situ detection of internal electrode expansion pressure signals and temperature under various operating states of power batteries, providing critical data for the construction of accurate battery numerical models and battery management systems, thereby providing an important means for the industrial application of a new generation of safe and efficient lithium batteries.

Specifically, the electrode layer 40 is configured to collect electrical signal changes from the sensitive layer 42, form a conductive network through contact with the sensitive layer 42, and convert pressure signals into electrical signals. The sensitive layer 42 is configured to form a contact resistance with the electrode layer 40, enabling the pressure sensor 400 to acquire the applied pressure based on the contact resistance between the sensitive layer 42 and the electrode layer 40. That is, it may be a resistive pressure sensor, which mainly relies on the deformation of the sensitive layer under the action of external force to cause the internal conductive network to break or reconstruct and cause the change of resistance, thereby reflecting the size of the applied external force.

In some embodiments of the present application, the electrode layer 40 includes a first electrode 401 and a second electrode 402 arranged in an interdigitated manner. Here, the interdigitated electrodes refer to finger-like or comb-like electrodes with periodic in-plane patterns. The first electrode 401 and the second electrode 402 are located on the same side of the sensitive layer 42, that is, the first electrode 401 and the second electrode 402 are coplanar electrodes. Due to the narrow space inside the battery, if the sensor is too thick, when the sensor is placed inside the battery, stress concentration at a single point may cause damage to the battery electrode material, lithium plating, and other problems. In this implementation, by selecting interdigitated electrode-based coplanar electrodes, the thickness of the sensor can be effectively reduced without affecting the deformation capability of the sensitive layer under pressure, thereby achieving sensitive resistance change collection capability.

In some embodiments of the present application, the first electrode 401 includes a plurality of first electrode strips arranged side by side and spaced apart, and the second electrode 402 includes a plurality of second electrode strips arranged side by side and spaced apart, where at least a portion of the first electrode strips are disposed in spacing regions between the second electrode strips. The widths of the first electrode strips and the second electrode strips are 10-200 µm, and the spacing distances between adjacent first electrode strips and second electrode strips are 10-200 µm. The width of the electrode strips and the spacing between the electrode strips are measured along the arrangement direction of the electrodes; the distance from one side of the electrode strip to the other side is measured using a micrometer to obtain the width of the electrode strip; the distance from the edge at one side of the first electrode strip close to the second electrode strip to the edge at one side of the second electrode strip close to the first electrode strip is measured using a micrometer to obtain the spacing between the electrode strips. The greater the number of interdigitated fingers per unit area, the better the performance output of the sensor. However, if the electrode strips are too thin or the spacing between the electrode strips is too small, the solder joints may be unstable and prone to thickness discontinuity points, which may lead to performance degradation. In this implementation, with comprehensive consideration of the performance requirements, through rational configuration of the widths and spacing of the electrode strips, conductive networks can be easily formed between the first electrode and the second electrode via the protrusion structures, improving detection sensitivity of the sensor.

In some embodiments of the present application, the widths of the first electrode strips and the second electrode strips are 50-150 µm, and the spacing distances between adjacent first electrode strips and second electrode strips are 20-80 µm. For example, the widths of the first electrode strips and the second electrode strips is 50 µm, 80 µm, 100 µm, 120 µm, 150 µm, etc.; if the width of the electrode strips is too small (less than 50 µm), issues such as broken wires are prone to occur, leading to unstable solder joints; if the width of the electrode strips is too large (greater than 150 µm), the electrode arrangement density will decrease within the limited space, which reduces the number of electrodes and lowers the sensitivity of the sensor. The spacing distances between adjacent first electrode strips and second electrode strips are 20 µm, 35 µm, 50 µm, 60 µm, 80 µm, etc. If the spacing between the electrode strips is too small (less than 20 µm), issues such as short circuits and abrupt welding thickness changes are prone to occur; if the spacing between the electrode strips is too large (greater than 80 µm), the electrode arrangement density will decrease within the limited space, which reduces the number of electrodes and lowers the sensitivity of the sensor. Further optimization of the widths and the spacing of electrode strips facilitates the formation of an electrical connection directly with two adjacent first and second electrode strips using a protrusion structure.

In some embodiments of the present application, the interdigitated electrodes may be metal wires that are not connected to each other and are manufactured on an insulating substrate through a circuit etching process. The interdigitated electrodes can be processed based on the copper plate circuit process of the FPC board (flexible circuit board), where a PI film (polyimide) is used as the substrate, and copper wires are formed on the substrate to produce the interdigitated electrodes. To enhance the conductivity between the sensitive layer and the electrodes for accurate collection of changes in resistance, a 10 nm gold (Au) layer can also be deposited on the surface of the copper wire.

In some embodiments of the present application, a material of the sensitive layer 42 includes a flexible substrate and conductive particles dispersed within the flexible substrate.

The flexible substrate is configured to enable deformation of the sensitive layer 42 under pressure and recovery after release of the pressure. The conductive particles are configured to constitute a conductive network upon contact with the electrode layer 40. The flexible substrate may be selected from high-molecular materials such as polyurethane; and the conductive particles may be selected from graphite, carbon nanotubes, and the like.

In some embodiments of the present application, the sensitive layer 42 is provided with microstructures, specifically including at least two types of protrusion structures 422 of different heights. The protrusion structures 422 contact two non-connected electrodes of the electrode layer 40 to form a conductive network and establish contact resistance. The height direction is along a direction from the base layer 420 to the electrode layer 40 (X direction shown in the figure), and the height of the protrusion structure 422 can be measured under a scanning electron microscope. As pressure gradually increases, the area of contact between the protrusion structures 422 and the electrodes gradually enlarges, and the contact resistance gradually decreases. The change in the area of contact of the protrusion structures 422 is caused by compressive deformation resulting from the pressure applied to the protrusion structures 422 and the supporting effect of the electrode layer 40.

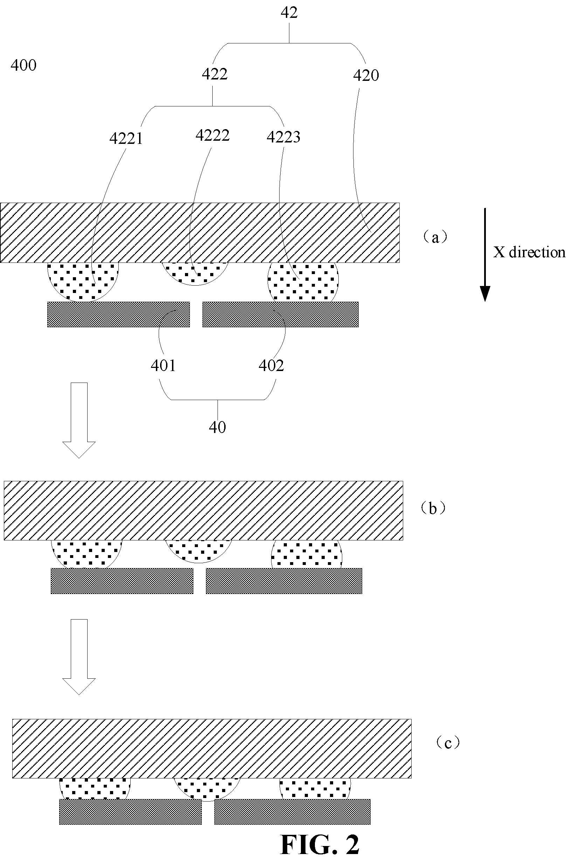

Reference may be made to FIG. 2. FIG. 2 is a cross-sectional structural schematic diagram of the pressure sensor under different pressure states according to one or more embodiments of the present application. (a) in FIG. 2 is a cross-sectional structural schematic diagram of the pressure sensor in a first pressure state according to one or more embodiments of the present application, (b) in FIG. 2 is a cross-sectional structural schematic diagram of the pressure sensor in a second pressure state according to one or more embodiments of the present application, and (c) in FIG. 2 is a cross-sectional structural schematic diagram of the pressure sensor in a third pressure state according to one or more embodiments of the present application. As the pressure further increases, the protrusion structures 422 that were not originally involved in construction of the conductive network come into contact with the electrode and are incorporated into the conductive network, which is equivalent to connecting new resistors in parallel within the original conductive network, thereby further reducing the overall resistance across the electrode to reflect changes in the pressure value. In this implementation, three protrusion structures 422 of different heights are included, where protrusion 4221 is a protrusion of a protrusion structure of a first height, protrusion 4222 is a protrusion of a protrusion structure of a second height, and protrusion 4223 is a protrusion of a protrusion structure of a third height. The height of the protrusion 4223 is greater than the height of the protrusion 4221, and the height of the protrusion 4221 is greater than the height of the protrusion 4222. As shown in (a) in FIG. 2, in the first pressure state, the protrusion 4221 and the protrusion 4223 are in contact with the first electrode 401 and the second electrode 402 of the electrode layer 40, respectively, to form a conductive network. At this time, the area of contact between the protrusion structure 422 and the electrode is relatively small. As the pressure increases, as shown in (a) in FIG. 2, under the second pressure (the second pressure is greater than the first pressure) state, the area of contact between the protrusions 4221 and 4223 and the electrode increases. As the pressure continues to increase, as shown in (c) in FIG. 2, under the third pressure (the third pressure is greater than the second pressure) state, the protrusion 4222, which originally did not contact the electrode, begins to contact the electrode, and the protrusion 4222 simultaneously contacts the first electrode 401 and the second electrode 402, forming a new conductive network. From state (a) to state (c) in FIG. 2, the area of contact between the protrusion 4221 and the first electrode 401 gradually increases; from state (a) to state (b) in FIG. 2, the area of contact between the protrusion 4223 and the second electrode 402 gradually increases; however, from state (b) to state (c) in FIG. 2, the area of contact between the protrusion 4223 and the second electrode 402 does not significantly increase. This is because the protrusion 4223 reaches its deformation limit after being compressed to a certain extent, and no longer undergoes significant changes. That is, when the compression amount of the protrusion is within a certain range (i.e., the pressure-sensitive range), the change in the area of contact is relatively obvious, thereby enabling effective pressure detection. However, beyond this range, the change in the area of contact is not obvious or does not change, thereby making effective pressure detection impossible or resulting in reduced sensitivity. In this embodiment, by arranging two types of protrusion structures of different heights, the pressure-sensitive ranges of protrusion structures of each height are differentiated, enabling the pressure sensor to adapt to detection environments under various pressures, thereby effectively obtaining the range and sensitivity of the pressure sensor. For example, from state (b) to state (c) in FIG. 2, the area of contact between the protrusion 4223 and the second electrode 402 does not significantly increase, but at this time, the protrusion 4222 begins to contact the electrode and forms a new conductive network, that is, new resistors are incorporated, thereby continuing to achieve more sensitive resistance changes and improving the measurement range and sensitivity.

In some embodiments of the present application, along a height direction of the protrusion structures, at least a portion of the protrusion structures 422 of relatively smaller heights are spaced apart from the electrode layer 40 and are configured to contact the electrode layer 40 when subjected to pressure greater than a predetermined threshold. As shown in FIG. 2, the height of the protrusion 4223 is greater than the height of the protrusion 4221, and the height of the protrusion 4221 is greater than the height of the protrusion 4222. In the first pressure state, the protrusion 4222 is spaced apart from the electrode layer 40, the protrusion 4221 just contacts the electrode layer 40, and the protrusion 4223 contacts the electrode layer 40 and is compressed to a certain extent. When the pressure increases to a second pressure, the protrusion 4222 is spaced apart from the electrode layer 40, and the protrusions 4221 and 4223 contact the electrode layer 40 and are further compressed. When the pressure increases to the third pressure, the compression degree of the protrusion 4223 does not change significantly compared with that in the second pressure state, the protrusion 4221 is further compressed, and the protrusion 4222 begins to contact the electrode layer 40. This approach allows the protrusion structures of relatively smaller heights to contact the electrode layer only after the protrusion structures of relatively larger heights are compressed to a certain extent. This can ensure that the pressure-sensitive ranges of the protrusion structures of relatively larger heights are effectively staggered from the pressure-sensitive ranges of the protrusion structures of relatively smaller heights, thereby further expanding the detection range and sensitivity.

In some embodiments of the present application, along the height direction of the protrusion structures, the protrusion structure of the largest height is configured to maintain contact with the electrode layer 40 at all times. With continued reference to FIGS. 1 and 2, the protrusion 4223 can maintain contact with the electrode layer 40 at all times in both natural and compressed states. The natural state is a state in which the pressure sensor is placed in an atmospheric pressure environment and is not affected by other pressures. The sensitive layer will collapse due to pressure application, and the collapse will cause the resistance of the sensor to decrease substantially prematurely. By supplementing microstructures at positions prone to collapse, abrupt drops in resistance can be effectively delayed, thereby extending the range of the sensor. The protrusion structure of the largest height can provide support for the sensitive layer, effectively mitigating adverse effects caused by collapse of the sensitive layer. Specifically, if the sensitive layer collapses, causing abnormal contact between protrusion structures and the electrode layer, the change in the area of contact of the protrusion structures will become inconsistent with the design expectations, thereby affecting measurement accuracy.

In some embodiments of the present application, the protrusion structure of the largest height is disposed in a central region and/or corner regions of the sensitive layer 42. Herein, the central region is an inner region of the sensitive layer adjacent to the middle, which is an internal region relative to edges. If the sensitive layer has a regular shape (e.g., circular, rectangular, elliptical), the central region is an area near the geometric center of the shape; if the sensitive layer has an irregular shape without a well-defined geometric center of the shape, the sensitive layer is approximated as the closest regular shape to determine the central region. Alternatively, the central region is an internal region distant from edge zones. The corner region is a region of the sensitive layer proximal to edges. The central region and the corner regions are regions relatively prone to collapse, and particularly when the sensitive layer has a large area, the central region receives smaller fixed traction forces and is more prone to collapse. By arranging protrusion structures of relatively larger heights in the corner and central region that are relatively prone to collapse, the sensitive layer can be more effectively supported.

In some embodiments of the present application, the protrusion of the protrusion structure 422 has a cross section perpendicular to a height direction of the protrusion, and in a direction from the base layer 420 to the electrode layer 40, the cross section of the protrusion gradually decreases in size.

Herein, the so-called "gradual decrease in the cross section of the protrusion" can be understood as: in the direction from the substrate layer 420 to the electrode layer 40, the protrusion of the protrusion structure 422 exhibits a shape with a larger base and a smaller head. For example, it may be a tapered shape gradually narrowing from the bottom end to the top end, or a truncated cone shape; it may also be a spherical cap shape with arc-shaped variation.

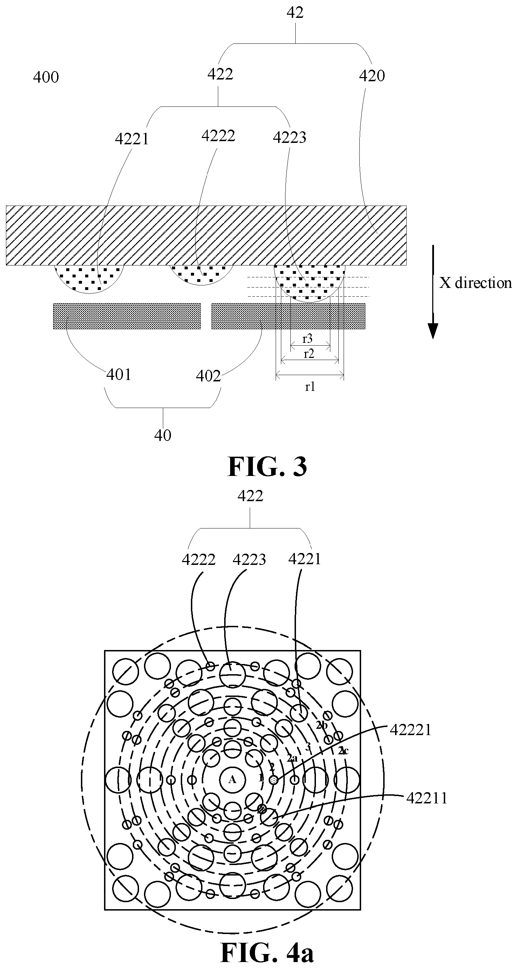

Reference may be made to FIG. 3. FIG. 3 is a cross-sectional structural schematic diagram of a pressure sensor according to one or more embodiments of the present application. Taking the protrusion being in a spherical cap shape as an example, cross sections are made at different heights to obtain radii r1, r2, and r3 of different cross sections. Along the direction from the substrate layer 420 to the electrode layer 40 (the X direction shown in the figure), the radii of the cross sections gradually decrease. Through this configuration, when the protrusion is compressed under pressure, the area of contact with the electrode layer 40 gradually changes, which can effectively improve the sensitivity of the area of contact of the protrusion to pressure. After a higher-level microstructure reaches a compression limit under pressure, a lower-level microstructure supplements contact with the electrode, and by means of graded pressure distribution through microstructures, the sensitivity of the sensor within a large range can be significantly improved, and pressure changes can be better distinguished.

In some embodiments of the present application, the protrusion of the protrusion structure 422 is configured in a spherical cap shape. Through this configuration, by utilizing the curved characteristics of outer surface of the spherical cap, the sensitivity of the area of contact of the protrusion structure to pressure can be further effectively improved.

In some embodiments of the present application, the protrusion has a cross section perpendicular to the height direction of the protrusion, and a maximum cross-sectional dimension of the protrusion is greater than or equal to 1.5 times the spacing distance between adjacent first electrode strips and second electrode strips. This configuration facilitates the formation of an electrical connection directly with the adjacent first and second electrode strips using a single protrusion. As shown in (c) in FIG. 2, the protrusion 4222 may be in contact with the first electrode 401 and the second electrode 402 to form a conductive network.

In some embodiments of the present application, each type of the protrusion structure includes a plurality of protrusions, and the plurality of protrusions of the same type of the protrusion structure are spaced apart and disposed along an annular reference line centered on a preset reference point. Herein, the arrangement may be at equal spacing or non-equal spacing.

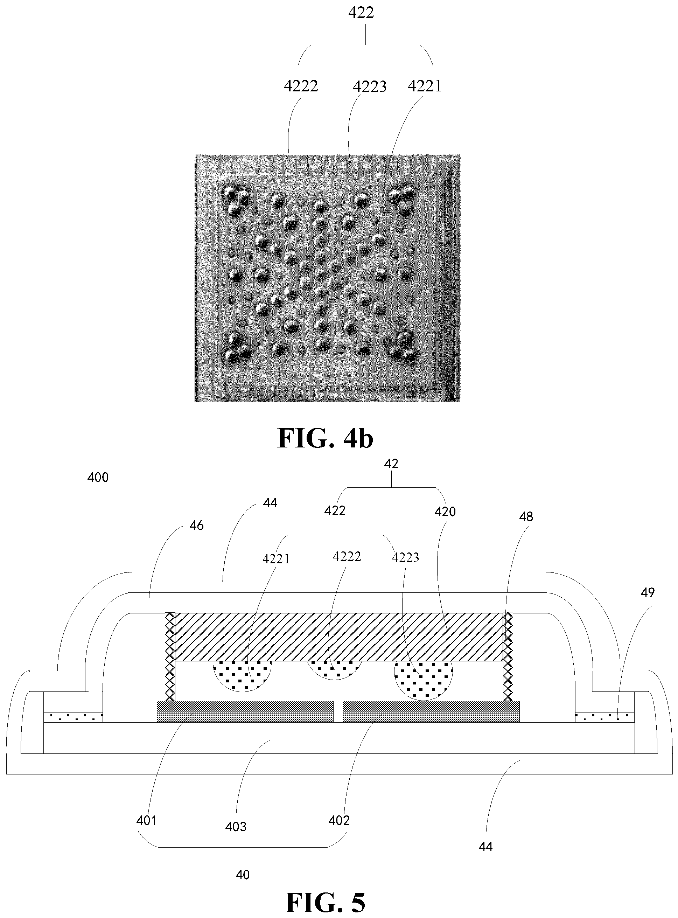

Reference may be made to FIGS. 4a and 4b. FIG. 4a is a layout design diagram of protrusion structures on the sensitive layer of the pressure sensor according to one or more embodiments of the present application, and FIG. 4b is a schematic layout diagram of protrusion structures on the sensitive layer on a pressure sensor sample according to one or more embodiments of the present application. In this implementation, three protrusion structures 422 of different heights are included, where protrusion 4221 is a protrusion of a protrusion structure of a first height, protrusion 4222 is a protrusion of a protrusion structure of a second height, and protrusion 4223 is a protrusion of a protrusion structure of a third height. The height of the protrusion 4223 is greater than the height of the protrusion 4221, and the height of the protrusion 4221 is greater than the height of the protrusion 4222. As shown in FIG. 4a, a plurality of protrusions 4221 are spaced apart on annular reference line 1 centered on preset reference point A; a plurality of protrusions 4222 are spaced apart on annular reference line 2 centered on preset reference point A; a plurality of protrusions 4223 are spaced apart on annular reference line 3 centered on preset reference point A. By arranging protrusions of the same height along the annular reference line, the annular reference line can be used as a unit for design considerations during the design process, reducing the arrangement complexity of protrusion structures.

In some embodiments of the present application, the preset reference point is disposed in a maximum deformation zone of the sensitive layer 42 subjected to pressure.

Herein, the maximum deformation zone refers to the theoretical maximum deformation zone of the sensitive layer 42 subjected to pressure when the supporting effect of the protrusion structures 422 is not considered. After determining the maximum deformation zone, with the maximum deformation zone as a reference, deformations in other regions of the sensitive layer 42 exhibit certain regularity relative to the maximum deformation zone. By setting the center of the annular reference lines at the maximum deformation zone and utilizing the regularity of deformations in the sensitive layer 42 relative to the maximum deformation zone to arrange appropriate annular reference lines, the arrangement complexity of the protrusion structures 422 can be further reduced.

In some embodiments of the present application, the preset reference point is disposed in the central region of the sensitive layer 42. The central region is an inner region of the sensitive layer adjacent to the middle, which is an internal region relative to edges. If the sensitive layer has a regular shape (e.g., circular, rectangular, elliptical), the central region is an area near the geometric center of the shape; if the sensitive layer has an irregular shape without a well-defined geometric center of the shape, the sensitive layer is approximated as the closest regular shape to determine the central region. Alternatively, the central region is an internal region distant from edge zones. By disposing the preset reference point in the central region of the sensitive layer 42, more space can be reserved around it for arrangement of annular reference lines, thereby further reducing the arrangement complexity of the protrusion structures.

In some embodiments of the present application, the protrusions of the protrusion structures 422 of the same height are divided into at least two groups, and the protrusions of different groups are located on different annular reference lines. Alternatively, each type of the protrusion structure includes a plurality of protrusions, and the plurality of protrusions of the same type of the protrusion structure are spaced apart to form a plurality of groups of annular structures, a plurality of protrusions of each group of annular structures being located on one annular reference line.

Please continue to refer to FIG. 4a. There are a plurality of protrusions 4222, and the plurality of protrusions 4222 are divided into a plurality of groups. As described in FIG. 4a, a first group of protrusions 4222 are arranged along annular reference line 2a, a second group of protrusions 4222 are arranged along annular reference line 2b, and a third group of protrusions 4222 are arranged along annular reference line 2c. In this embodiment, by grouping protrusions of the same height and planning with the annular reference line as a unit, particularly when the sensitive layer has a large area and the number of protrusion structures is large, group-based planning can further reduce the arrangement complexity of the protrusion structures.

In some embodiments of the present application, the number of the protrusions of the same height on the same annular reference line is not fewer than three. As described in FIG. 4a, six protrusions 4221 of the protrusion structure are arranged on the annular reference line 1. Through this configuration, the gradient of changes in the area of contact is increased, which is beneficial for improving the sensitivity of the pressure sensor.

In some embodiments of the present application, the protrusion structures 422 of different heights are located on different annular reference lines. Alternatively, the plurality of reference lines do not intersect or coincide. By utilizing different annular reference lines to plan protrusion structures of different heights, the arrangement complexity of the protrusion structures is reduced.

In some embodiments of the present application, at least a portion of the protrusions of the protrusion structures 422 are configured to be capable of partially overlapping with protrusions of protrusion structures of other heights after being moved along the annular reference lines on which they are located. As shown in FIG. 4a, when the protrusion 42221 is moved clockwise along the reference line 2, it partially overlaps with the protrusion 42211 when moving past the protrusion 42211. This configuration is beneficial for increasing the arrangement density of the protrusion structures, thereby improving the sensitivity of the pressure sensor.

In some embodiments of the present application, the annular reference line includes one of a circle, an ellipse, or a polygon. By utilizing the equidistant property of the circumferential or regular shapes to the center, the arrangement complexity can be reduced.

In some embodiments of the present application, the protrusion of the protrusion structure 422 has a cross section perpendicular to a height direction of the protrusion, and a maximum cross-sectional dimension of the protrusion of the protrusion structure 422 of a relatively smaller height is smaller than a maximum cross-sectional dimension of the protrusion of the protrusion structure 422 of a relatively larger height. For example, the maximum cross-sectional dimension of the protrusion 4222 may be smaller than the maximum cross-sectional dimension of the protrusion 4223. Herein, since the protrusion 4223 of a relatively larger height shares a portion of the pressure, the maximum cross-sectional dimension of the protrusion 4222 of a relatively smaller height is set to be relatively smaller, enabling it to deform more easily, thereby making the change in the area of contact more sensitive to pressure and improving the sensitivity when the protrusion structure of a relatively smaller height contact the electrode layer.

In some embodiments of the present application, the number of the protrusion structures of relatively smaller heights is greater than the number of the protrusion structures of relatively larger heights. As shown in FIG. 4a, the number of the protrusions 4222 is greater than the number of the protrusions 4221, and the number of the protrusions 4221 is greater than the number of the protrusions 4223. Herein, since protrusion structures of relatively larger heights share a portion of the pressure, by increasing the number of protrusion structures of relatively smaller heights, the overall pressure borne by the relatively smaller protrusion structures can be increased, while also increasing the rate of change of the area of contact of the relatively smaller protrusion structures with pressure, thereby improving the detection sensitivity.

In some embodiments of the present application, the plurality of protrusion structures 422 have at least three different heights. Herein, after a higher-level protrusion structure reaches a compression limit under pressure, a lower-level protrusion structure supplements contact with the electrode, and by means of graded pressure distribution through protrusion structures, the sensitivity of the sensor within a large range can be significantly improved, and pressure changes can be better distinguished. By providing a plurality of heights, the range and sensitivity can be increased.

In some embodiments of the present application, in two adjacent heights of the at least two different heights, a ratio of a difference between a relatively larger height and a relatively smaller height to the relatively larger height is 0.3-0.8. For example, the ratio of the height difference between the protrusion 4223 and the protrusion 4221 to the height of the protrusion 4223 is 0.3-0.8. Specifically, the height ratio may be 0.3, 0.4, 0.5, 0.6, 0.7, 0.8, etc. If the height ratio between the two is too small (e.g., less than 0.3), the contact processes between different protrusion structures and electrodes will lack span, making it prone to simultaneous arrival of two protrusion structures at compression limits and resulting in an excessively small measurement range. If the height ratio between the two is too large (e.g., greater than 0.8), the contact processes between different protrusion structures and electrodes will have excessive span, making it prone to abrupt changes in resistance that affect detection sensitivity. By setting the height ratio to 0.3-0.8, the continuity of changes in the area of contact can be improved, thereby enhancing the sensitivity.

In some embodiments of the present application, the heights of protrusions of the plurality of protrusion structures 422 are 5-200 µm. The height direction is along a direction from the base layer 420 to the electrode layer 40 (X direction shown in the figure), and the height of the protrusion structure 422 can be measured under a scanning electron microscope. Optionally, the heights of protrusions of the plurality of protrusion structures 422 are 10-50 µm. For example, the heights of three different protrusion structures may be 10 µm, 30 µm, and 50 µm; that is, three protrusion structures of different heights of 10 µm, 30 µm, and 50 µm may be simultaneously disposed in one sensitive layer. Specifically, the heights may be 5 µm, 15 µm, 25 µm, 50 µm, 70 µm, 90 µm, 110 µm, 130 µm, 150 µm, etc. If the height is too small (e.g., less than 5 µm), the fabrication difficulty increases, and the setting intervals between different heights become smaller, making it difficult to regulate the height ratios between different protrusion structures. If the height is too large (e.g., greater than 200 µm), the sensitive layer becomes prone to collapse. When the height is within 10-50 µm, the heights of different protrusion structures are relatively uniform, and the height ratios are easier to regulate. By setting the heights within the above range, excessive pressure borne by protrusion structures of relatively larger heights is avoided, and pressure sensitivity of the area of contact of protrusion structures of relatively smaller heights is improved, thereby enabling the pressure sensor to have a higher range.

In some embodiments of the present application, a mold may be used for reverse molding to form the sensitive layer. The mold for reverse molding the sensitive layer may be composed of an acrylic sheet outer layer and a PDMS (polydimethylsiloxane) inner layer, where PDMS serves as the mold body, and the acrylic outer frame is used to carry the PDMS. PDMS solution is mixed with a curing agent, and a mass ratio of the PDMS solution to the curing agent is 10:1. The mixture is placed in a vacuum chamber for 30 minutes to remove air bubbles, and then heated at 80°C for 1 hour to make it fully cross-linked and cured. After molding, infrared/ultraviolet lasers are used to perform microstructure processing and groove machining on the PDMS mold. Specifically, an infrared laser may be used to machine corresponding pits on the PDMS surface according to the designed structural pattern. The depth and diameter of the microstructures can be adjusted by changing the processing power, number of laser pulses, and processing frequency of the laser. The sensitive layer is prepared by reverse molding through coating the machined grooves with the sensitive layer solution.

Reference may be made to FIG. 5. FIG. 5 is a planar structural schematic diagram of the pressure sensor according to one or more embodiments of the present application. The pressure sensor 400 further includes a corrosion-resistant protective layer 44, where the corrosion-resistant protective layer 44 is configured to resist corrosion from the primary electrolyte solution inside lithium batteries. The sensitive layer 42 is configured to sense external forces, and the sensitive layer 42 includes a substrate layer 420 and at least two types of protrusion structures 422 of different heights protruding from the substrate layer 420. The electrode layer 40 and the sensitive layer 42 are encapsulated via a sensitive layer binder 48, and the combination of the two forms a key pressure-responsive circuit. The electrode layer 40 includes an electrode substrate 403, as well as a first electrode 401 and a second electrode 402 arranged in an interdigitated manner, where the electrode substrate 403 is configured to carry film structures such as the sensitive layer 42. An isolation layer 46 is disposed between the sensitive layer 42 and the corrosion-resistant protective layer 44, and is configured to protect the sensitive layer 42 from being affected or damaged during the manufacturing process of the corrosion-resistant protective layer 44. The isolation layer 46 is connected to the electrode substrate 403 via an isolation layer binder 49. The pressure sensor 400 is a piezoresistive sensor primarily based on changes in contact resistance between the microstructures of the sensitive layer and coplanar interdigitated electrodes.

In the above implementation, the sensitive function is mainly achieved by relying on pressure-induced changes in contact resistance between the conductive sensitive layer and the electrodes. Specific microstructures (e.g., pyramid-shaped, dome-shaped) manufactured on the sensitive layer to contact the electrodes can alter the contact characteristics between the sensitive layer and the electrodes, thereby enhancing or regulating the piezoresistive properties of the sensor. The introduction of microstructures with specific shapes can improve performance metrics such as sensitivity and range of the pressure sensor to a certain extent.

In some embodiments of the present application, the pressure sensor can be used for detecting internal pressure in batteries. That is, the present application provides a battery cell. The battery cell includes a shell and the pressure sensor according to any one of the aforementioned embodiments, where the pressure sensor is disposed inside the shell.

Embodiments of the present application are applicable to batteries of various systems, such as lithium batteries and sodium batteries. There are no specific limitations on the shape of the battery, which may be cylindrical, prismatic, or any other shape.

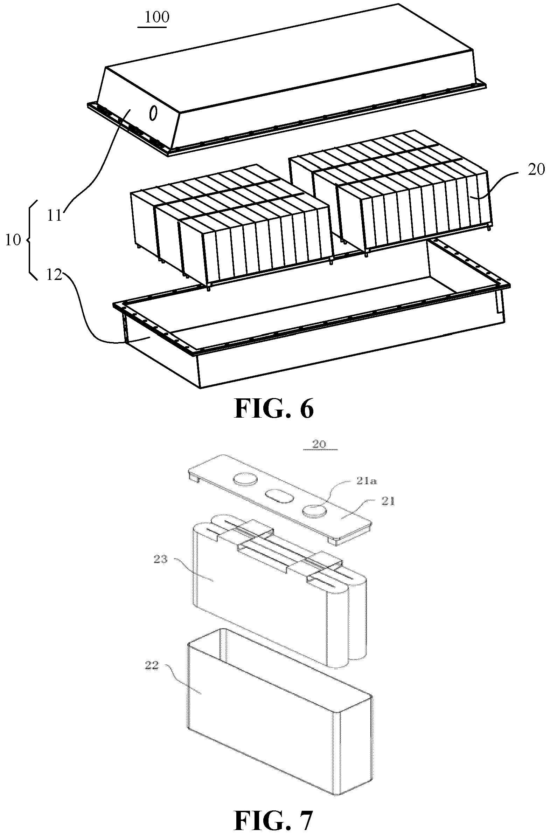

In some implementations, the battery 100 of the present application includes a box 10 and a battery cell 20, where the battery cell 20 is accommodated within the box 10. Reference may be made to FIG. 6. FIG. 6 is an exploded structural schematic diagram of the battery according to one or more embodiments. The box 10 is configured to provide an accommodating space for the battery cell 20 and the box 10 may be of various structures. In some embodiments, the box 10 may include a first portion 11 and a second portion 12, the first portion 11 and the second portion 12 covering each other, and the first portion 11 and the second portion 12 together defining the accommodating space for accommodating the battery cell 20. The second portion 12 may be of a hollow structure with an opening at one end, and the first portion 11 may be of a plate-like structure, where the first portion 11 covers the opening side of the second portion 12 so that the first portion 11 and the second portion 12 together define the accommodating space; and the first portion 11 and the second portion 12 may each be of a hollow structure with an opening at one end, where the opening side of the first portion 11 is capped on the opening side of the second portion 12. Of course, the box 10 formed by the first portion 11 and the second portion 12 may be of a variety of shapes, such as a cylinder, a rectangular solid, or the like.

In the battery 100, there may be a plurality of battery cells 20, and the plurality of battery cells 20 may be connected in series or in parallel or in parallel-series connection, where the parallel-series connection means that the plurality of battery cells 20 are connected in both series and parallel. The plurality of battery cells 20 may be directly connected together in series or in parallel or in parallel-series connection, and then the whole composed of the plurality of battery cells 20 may be accommodated in the box 10. Of course, the battery 100 may also be in the form of a battery module first formed by the plurality of battery cells 20 being connected in series or in parallel or in parallel-series connection, then the plurality of battery modules may be connected in series or in parallel or in parallel-series connection to form a whole, and accommodated in the box 10. The battery 100 may further include other structures. For example, the battery 100 may further include a busbar component configured to achieve electrical connections between the plurality of battery cells 20.

Herein, each battery cell 20 may be a secondary battery, which may be a lithium-ion battery, sodium-ion battery, magnesium-ion battery, aluminum-ion battery, but is not limited thereto. The battery cells 20 may be cylindrical, flat, rectangular, or in other shapes.

Battery manufacturing methods include stacked-type and wound-type, i.e., batteries are classified into stacked batteries and wound batteries. Stacked batteries provide a uniform current collection effect, lower battery internal resistance, and higher specific power. However, to ensure precision, they require extremely high mold accuracy, involve high equipment investment, and have complex processes with low production efficiency. Wound batteries are simpler to manufacture, with general equipment accuracy requirements for electrode sheet processing and assembly processes, higher production efficiency, and lower costs. **In** terms of performance, wound batteries exhibit excellent high/low-temperature performance, extremely fast charging, ultra-long lifespan, stable high output voltage, robust structure, and strong vibration resistance.

Reference may be made to FIG. 7. FIG. 7 is an exploded structural schematic diagram of a battery cell 20 according to one or more embodiments of the present application. The battery cell 20 is a fundamental unit within the battery for mutual conversion between chemical energy and electrical energy. The battery cell 20 includes an end cover 21, a case 22, an electrode assembly 23, and other functional components.

The end cover 21 is a component that covers the opening in the case 22 to isolate the internal environment of the battery cell 20 from the external environment. Without limitation, the shape of the end cover 21 may be adaptive to the shape of the case 22 so as to be matched with the case 22. Optionally, the end cover 21 may be made of a material (such as an aluminum alloy) with a certain hardness and strength, so that the end cover 21 is not easy to be deformed when being pressed and collided, the battery cell 20 can have a higher structural strength, and the safety performance can also be improved. Functional components such as electrode terminals 21a may be arranged on the end cover 21. The electrode terminals 21a can be configured to electrically connected to the electrode assembly 23 for use in outputting or inputting electrical energy from or to the battery cell 20. In some embodiments, the end cover 21 may be further provided with a pressure relief mechanism configured to relieve internal pressure when the internal pressure or temperature of the battery cell 20 reaches a threshold. The end cover 21 may also be made of a variety of materials, including, but not limited to copper, iron, aluminum, stainless steel, aluminum alloy, plastic, etc. In some embodiments, an insulating member may also be arranged on an inner side of the end cover 21 and the insulating member may be configured to isolate an electrical connection component in the case 22 from the end cover 21, thereby reducing the risk of short circuit. For example, the insulating member may be made of plastic, rubber, and the like.

The case 22 is an assembly for fitting the end cover 21 to form the internal environment of the battery cell 20, where the formed internal environment can be used to accommodate the electrode assembly 23, electrolyte solution, and other components. The case 22 and the end cover 21 may be separate components, and an opening may be provided in the case 22, and the internal environment of the battery cell 20 may be formed by making the end cover 21 cover the opening at the opening. Without limitation, the end cover 21 and the case 22 may also be integrated. Specifically, the end cover 21 and the case 22 may form a common connection surface before other components enter the shell. When an interior of the case 22 is required to be encapsulated, the case 22 is covered with the end cover 21. The case 22 may be in various shapes and sizes, such as a cuboid, a cylinder and a hexagonal prism. Specifically, the shape of the case 22 may be determined according to the specific shape and size of the electrode assembly 23. The case 22 may also be made of a variety of materials, including, but not limited to copper, iron, aluminum, stainless steel, aluminum alloy, plastic, etc.

The electrode assembly 23 is a component in which an electrochemical reaction occurs in the battery cell 20. One or more electrode assemblies 23 may be included within the case 22. The electrode assembly 23 is primarily formed by winding or stacking cathode electrode plates and anode electrode plates, with a separator typically disposed between a cathode electrode plate and an anode electrode plate. The portions of the cathode electrode plates and the anode electrode plates having active materials constitute the main body portion of the electrode assembly, while the portions of the cathode electrode plates and the anode electrode plates without active materials respectively form tabs 23a. The cathode tab and the anode tab may be co-located at one end of the main body portion or respectively located at two ends of the main body portion. During battery charge/discharge processes, cathode active materials and anode active materials react with the electrolyte solution. The tabs 23a are connected to electrode terminals to form a current loop.

The cathode electrode plate generally includes a cathode current collector and a cathode film layer disposed on the cathode current collector.

The cathode current collector typically employs conventional metal foils or composite current collectors (where metallic materials are disposed on high-molecular substrates to form composite current collectors). As an example, the cathode current collector may use aluminum foil.

The cathode film layer includes cathode active materials along with binders, conductive agents, and other optional additives.

As an example, the cathode active materials may include one or more of lithium transition metal oxides, olivine-structured lithium-containing phosphates and their modified compounds, transition metal oxides, polyoxyanion compounds, and Prussian blue analogue. Examples of the lithium transition metal oxide may include one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the olivine-structured lithium-containing phosphate may include one or more of lithium iron phosphate, composites of lithium iron phosphate and carbon, lithium manganese phosphate, composites of lithium manganese phosphate and carbon, lithium iron manganese phosphate, composites of lithium iron manganese phosphate and carbon, and modified compounds thereof. The modified compounds of the aforementioned materials may be produced by modification through doping and/or surface coating of the materials. These materials are all commercially available.

As an example, the conductive agent may be one or more of superconducting carbon, acetylene black, carbon black, Ketjen black, carbon dots, carbon nanotubes, Super P (SP), graphite, and carbon nanofibers.

As an example, the binder may be one or more of styrene butadiene rubber (SBR), water-based acrylic resin, polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

As an example, other optional additives may include thickening and dispersing agents (e.g., sodium carboxymethyl cellulose CMC-Na) and PTC thermistor materials.

The anode electrode plate generally includes an anode current collector and an anode film layer disposed on the anode current collector.

The anode current collector may employ conventional metal foils or composite current collectors (e.g., metallic materials may be disposed on high-molecular substrates to form composite current collectors). As an example, the anode current collector may use copper foils.

The anode film layer includes anode active materials, binders, conductive agents, and other optional additives.

The anode active materials may include one or more of silicon-based materials, silicon-carbon materials, carbon materials, and selenium-based materials. Specifically, they include one or more of artificial graphite, natural graphite, hard carbon, soft carbon, silicon-based materials, and selenium-based materials. The silicon-based material may be selected from one or more of elemental silicon, a silicon oxide compound (e.g., silicon monoxide), a silicon-carbon composite, a silicon-nitrogen composite and a silicon alloy. The selenium-based materials may be selected from one or more of elemental selenium, selenium oxide compounds, and selenium alloys. These materials are all commercially available. In some embodiments of the present application, the design concept of active density is also applicable to sodium batteries, or in other words, the battery type is not limited. The present application does not limit the selection and combination of electrode materials. Different combinations of cathode and anode materials may have different active density regulation standards.

As an example, the conductive agent may be one or more of superconductive carbon, acetylene black, carbon black, Ketjen black, carbon dots, carbon nanotubes, graphite, and carbon nanofibers.

As an example, the binder may be one or more of styrene-butadiene rubber (SBR), water-based acrylic resin, polyvinylidene fluoride (PVDF), polytetrafluoroethylene (PTFE), ethylene-vinyl acetate copolymer (EVA), polyvinyl alcohol (PVA), and polyvinyl butyral (PVB).

As an example, other optional additives may include thickening and dispersing agents (e.g., sodium carboxymethyl cellulose CMC-Na) and PTC thermistor materials.

In an implementation, the cathode active material and the anode active material are mixed with binders and conductive agents in specific proportions to obtain cathode slurry and anode slurry, respectively. The cathode slurry and anode slurry are then coated onto the corresponding current collectors, followed by drying to obtain cathode electrode plates and anode electrode plates, respectively.

Further, the battery cell further includes a separator and an electrolyte solution.

The separator is disposed between the cathode electrode plate and the anode electrode plate, serving as an insulating layer which can effectively prevent contact between the cathode electrode plate and the anode electrode plate that could cause internal short circuits, while allowing electrolyte ions to pass through smoothly. The performance of the separator determines the battery's interface structure, internal resistance, etc., directly affecting the mechanical strength and safety performance of the battery.

The specific type of the material of the separator is not limited, and may include any materials known in the field for battery separators, which can be selected by those skilled in the art according to requirements. As an example, the material of the separator may include one or more of polyolefins, fluorine-containing polymers, cellulose, and glass fibers. The polyolefin may include, but is not limited to, one or more of polypropylene and polyethylene. These materials are all commercially available.

In some implementations, the separator includes a base film and a coating layer located on one side/both sides of the base film. The coating layer includes fillers. The fillers may contain inorganic materials, polymer adhesive agents, and dispersing agents, where the inorganic materials include one or more of boehmite and silica; the polymer adhesive agent materials include one or more of PVDF (polyvinylidene fluoride) and polystyrene-acrylate; and the dispersing agent materials include polyvinyl alcohol, etc. By providing coating layers on one side/both sides of the separator, the performance regulation of the separator can be improved. The performance of the separator can be regulated by adjusting the types of fillers. For example, fillers with heat insulation and heat resistance properties may be added to enhance the heat resistance of the separator. The specific types of base film materials are not limited and may include, but are not limited to, one or more of polyethylene, polypropylene, and glass fibers. These materials are all commercially available.

The electrolyte solution serves to conduct ions between the cathode electrode plate and the anode electrode plate, and may include electrolyte salts and solvents.

As an example, the electrolyte salt may be one or more selected from lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluoro bis(oxalato)phosphate (LiDFOP), and lithium tetrafluoro(oxalato)phosphate (LiTFOP).

As an example, the solvent may be selected from one or more of Ethylene Carbonate (EC), Propylene Carbonate (PC), Methyl Ethyl Carbonate (EMC), Diethyl Carbonate (DEC), Dimethyl Darbonate (DMC), Dipropyl Carbonate (DPC), Methyl Propyl Carbonate (MPC), Diisopropyl Carbonate (EPC), Butylene Carbonate (BC), Fluoroethylene Carbonate (FEC), Methyl Formate (MF), Methyl Acetate (MA), Ethyl Acetate (EA), n-Propyl Acetate (PA), Methyl Propionate (MP), Ethyl Propanoate (EP), n-Propyl Propionate (PP), Methyl Butyrate (MB), Ethyl Butyrate (EB), 1,4-Butyrolactone (GBL), Tetramethylene Sulfone (SF), Methyl Sulfone (MSM), Methyl Ethyl Sulfone (EMS) and Diethyl Sulfone (ESE).

In some implementations, the electrolyte solution further includes an additive. For example, the additive may include an anode electrode film-forming additive, or may include a cathode electrode film-forming additive, and may further include an additive capable of improving certain performances of the battery, such as an additive for improving the overcharging performance of the battery, an additive for improving the high temperature performance of the battery, an additive for improving the low temperature performance of the battery, etc.

The battery disclosed in the embodiments of the present application can be used in electrical devices that use batteries as power sources or in various energy storage systems that use batteries as energy storage elements. The electrical device may be, but is not limited to, a mobile phone, a tablet, a laptop, an electric toy, an electric tool, a battery vehicle, an electric vehicle, a ship, a spacecraft, and so on. Among them, the electric toy may include a stationary or mobile electric toy, for example, a game console, an electric toy car, an electric toy ship, an electric toy aircraft, or the like, and the spacecraft may include an aircraft, a rocket, a space shuttle, a spaceship, or the like.

The energy storage system may be an energy storage power supply system such as hydropower, thermal power, wind power, and solar power stations.

For ease of description, the following embodiments are illustrated by taking an electrical device being a vehicle 1000 in an embodiment of the present application as an example.

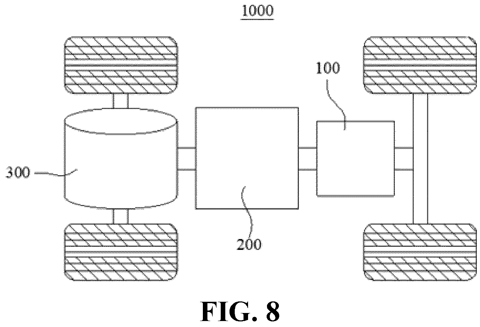

Reference may be made to FIG. 8. FIG. 8 is a structural schematic diagram of a vehicle 1000 according to some embodiments of the present application. The vehicle 1000 may be a fuel vehicle, a gas vehicle or a new energy vehicle. The new energy vehicle may be an all-electric vehicle, a hybrid vehicle, an extended-range vehicle, or the like. A battery 100 is arranged in the vehicle 1000. The battery 100 may be arranged at the bottom or head portion or tail portion of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to supply power for starting, navigation and driving of the vehicle 1000.

In some embodiments of the present application, the battery 100 may not only be used as the operating power source for the vehicle 1000, but also as a driving power source for the vehicle 1000, to replace or partially replace fuel or natural gas to provide driving power for the vehicle 1000.

The aforementioned electrical device and energy storage system also fall within the scope of protection of the present application.

The foregoing descriptions are merely some preferred implementations of the present application, but are not intended to limit the patent scope of the present application. Any variations with equivalent structure and equivalent flow made using the specification and accompanying drawings of the present application, which are directly or indirectly applied in other relevant technical fields, shall equally fall within the scope of patent protection of the present application.

## Claims

1. A pressure sensor, comprising:
an electrode layer; and
a sensitive layer comprising a base layer and at least two types of protrusion structures of different heights protruding from the base layer, each type of the protrusion structure comprising at least one protrusion, wherein each protrusion is located on a side of the base layer facing the electrode layer, and the area of contact between each protrusion and the electrode layer is configured to vary with changes in pressure applied to the electrode layer.

2. The pressure sensor according to claim 1, wherein
along a height direction of the protrusion structures, at least a portion of the protrusion structures of relatively smaller heights are spaced apart from the electrode layer and are configured to contact the electrode layer when subjected to pressure greater than a predetermined threshold.

3. The pressure sensor according to claim 1 or 2, wherein
along the height direction of the protrusion structures, the protrusion structure of the largest height is configured to maintain contact with the electrode layer at all times.

4. The pressure sensor according to claim 3, wherein the protrusion structure of the largest height is disposed in a central region and/or corner regions of the sensitive layer.

5. The pressure sensor according to any one of claims 1 to 4, wherein the protrusion has a cross section perpendicular to a height direction of the protrusion, and in a direction from the base layer to the electrode layer, the cross section of each protrusion gradually decreases in size.

6. The pressure sensor according to claim 5, wherein the protrusion is configured in a spherical cap shape.

7. The pressure sensor according to any one of claims 1 to 6, wherein each type of the protrusion structure comprises a plurality of protrusions, and the plurality of protrusions of the same type of the protrusion structure are spaced apart and disposed along an annular reference line centered on a preset reference point.

8. The pressure sensor according to claim 7, wherein the preset reference point is disposed in a maximum deformation zone of the sensitive layer subjected to pressure.

9. The pressure sensor according to claim 7 or 8, wherein the preset reference point is disposed in a central region of the sensitive layer located inward of an edge region.

10. The pressure sensor according to any one of claims 7 to 9, wherein each type of the protrusion structure comprises a plurality of protrusions, and the plurality of protrusions of the same type of the protrusion structure are spaced apart to form a plurality of groups of annular structures, a plurality of protrusions of each group of annular structures being located on one annular reference line.

11. The pressure sensor according to any one of claims 7 to 10, wherein the number of the protrusions of the same height on the same annular reference line is not fewer than three.

12. The pressure sensor according to any one of claims 7 to 11, wherein the protrusion structures of different heights are located on different annular reference lines.

13. The pressure sensor according to any one of claims 7 to 12, wherein at least a portion of the protrusions are configured to be capable of partially overlapping with protrusions of other heights after being moved along the annular reference lines on which they are located.

14. The pressure sensor according to any one of claims 7 to 13, wherein the annular reference line comprises one of a circle, an ellipse, or a polygon.

15. The pressure sensor according to any one of claims 1 to 14, wherein the protrusion has a cross section perpendicular to a height direction of the protrusion, and a maximum cross-sectional dimension of the protrusion of the protrusion structure of a relatively smaller height is smaller than a maximum cross-sectional dimension of the protrusion of the protrusion structure of a relatively larger height.

16. The pressure sensor according to any one of claims 1 to 15, wherein the number of the protrusion structures of relatively smaller heights is greater than the number of the protrusion structures of relatively larger heights.

17. The pressure sensor according to any one of claims 1 to 16, wherein the plurality of protrusion structures have at least three different heights.

18. The pressure sensor according to any one of claims 1 to 17, wherein in two adjacent heights of the at least two different heights, a ratio of a difference between a relatively larger height and a relatively smaller height to the relatively larger height is 0.3-0.8.

19. The pressure sensor according to any one of claims 1 to 18, wherein heights of the plurality of protrusion structures are 5-200 µm.

20. The pressure sensor according to any one of claims 1 to 19, wherein a material of the sensitive layer comprises a flexible substrate and conductive particles dispersed within the flexible substrate.

21. The pressure sensor according to claim 20, wherein the conductive particles comprise graphite particles and carbon nanotube particles.

22. The pressure sensor according to any one of claims 1 to 21, wherein the electrode layer comprises a first electrode and a second electrode arranged in an interdigitated manner.

23. The pressure sensor according to claim 22, wherein the first electrode comprises a plurality of first electrode strips arranged side by side and spaced apart, and the second electrode comprises a plurality of second electrode strips arranged side by side and spaced apart, wherein at least a portion of the first electrode strips are disposed in spacing regions between the second electrode strips, widths of the first electrode strips and the second electrode strips are 10-200 µm, and spacing distances between adjacent first electrode strips and second electrode strips are 5-200 µm.

24. The pressure sensor according to claim 22 or 23, wherein
the widths of the first electrode strips and the second electrode strips are 50-150 µm, and the spacing distances between adjacent first electrode strips and second electrode strips are 20-80 µm.

25. The pressure sensor according to claim 23 or 24, wherein the protrusion has a cross section perpendicular to the height direction of the protrusion, and a maximum cross-sectional dimension of the protrusion is greater than or equal to 1.5 times the spacing distance.

26. A battery cell, comprising a shell and the pressure sensor according to any one of claims 1 to 25, wherein the pressure sensor is disposed inside the shell.

27. An electrical device, comprising the battery cell according to claim 26.
